# EUROPEAN PATENT SPECIFICATION

(11) **EP 2 675 008 B1**
(45) Date of publication and mention of the grant of the patent: **22.01.2020**
(21) Application number: 12172241.7
(22) Date of filing: 15.06.2012
(51) Int. Cl.: H01M 8/04828, H01M 8/04029, H01M 8/04119, H01M 8/04082, H01M 8/04492

(54) **Fuel cell system and method for operating a fuel cell system**
Brennstoffzellensystem und Verfahren zum Betrieb eines Brennstoffzellensystems
Système de pile à combustible et procédé de contrôle d'un système de pile à combustible

(43) Date of publication of application: 18.12.2013
(73) Proprietor: Airbus Operations GmbH, 21129 Hamburg (DE); Deutsches Zentrum für Luft- und Raumfahrt e.V., 51147 Köln (DE)
(72) Inventor: Saballus, Martin, 23738 Damlos (DE); Brauer, André, 22761 Hamburg (DE); Renouard Vallet, Gwenaelle, 22763 Hamburg (DE); Stolte, Ralf-Henning, 22587 Hamburg (DE)
(74) Representative: LKGLOBAL Lorenz & Kopf PartG mbB Patentanwälte

(56) References cited:
- WO-A1-2011/036027
- WO-A2-01/97307
- DE-A1-102009 051 212
- DE-A1-102011 004 318
- GB-A- 2 442 309
- US-A1- 2003 031 906

## Description

### TECHNICAL FIELD

The invention is related to a fuel cell system and a method for operating a fuel cell system.

### BACKGROUND OF THE INVENTION

The operation of a fuel cell system with the supply of air as an oxidant and an appropriate fuel gas requires the constant adaption of air flow to the respective power demand of the fuel cell. Generally or normally, air is supplied to the fuel cell by means of a compressing device at an air inlet or alternatively by means of an extracting device, which extracting device sucks off air from the exhaust gas outlet.

DE 10 2011 004 318 A1 proposes to combine an active air supply by a compressing device at an air inlet and an extracting device connected to an exhaust gas outlet. This improves the ability of conducting rapid changes in power demands, as the air flow may rapidly be adapted, without air being blocked by increasing flow resistances or by a distinct drop in pressure.

It is furthermore known to use oxygen depleted air in the form of fuel cell exhaust gas for inerting a space in a vehicle, e.g. an aircraft fuel tank. In order to prevent a supply of water to the respective inerted space, it is necessary to considerably remove the water vapour from the exhaust gas. To achieve this, different methods are known. For example, gas separation may be conducted by means of a membrane that is permeable for gas but substantially impermeable for water vapour, wherein a certain partial pressure is necessary for a successful drying process requiring a compressing means for the exhaust gas to be dried. Furthermore, it is known to use a sorption means-based drying process, e.g. rotatable sorption wheels, containing a hygroscopic material that absorbs water vapour from exhaust gas. US2003/031906 A1 and WO01/97307 A2 describe fuel cell systems equipped with drying units to regulate water in the air supply and exhaust gas of the fuel cell.

### SUMMARY OF THE INVENTION

The use of a membrane-based drying process or a sorption means-based drying process may be optimized for a better performance when an active air supply by means of an air compressing unit and an extracting means are used simultaneously. Furthermore to use or produce by products that are necessary for regenerating sorption based drying means shall be prevented.

It may therefore be considered an object of the present invention to propose a fuel cell system that has an improved ability for rapid power demand changes and at the same time clearly having an improved ability to dry exhaust air from the exhaust gas outlet.

The object of the invention is met by a fuel cell system having the features of independent claim 1. Advantageous embodiments and improvements are presented in the sub-claims and in the following description.
In the following description of the invention the drying units are also referred to as first drying unit, second drying unit and third drying unit or the first one of the drying units, a second one of the drying units and a third one of the drying units. The numbering of the drying units clarifies a timely or spatial relationship between the drying units of the water extraction device. It is clear that the water extraction device may comprise further drying units, such as a fourth drying unit, a fifth drying unit and so on.

A fuel cell system according to the invention comprises at least one fuel cell having an air inlet and an exhaust gas outlet, an air supply device connectable to the air inlet and an air extracting means connectable to the exhaust gas outlet. The fuel cell system furthermore comprises a water extraction device, the water extraction device having at least two drying units, wherein the water extraction device is adapted for selectively providing a fluid connection from the air supply device to the fuel cell air inlet through a first one of the at least two drying units and from the air extracting means to the exhaust gas outlet through a second one of the at least two drying units.

The fuel cell system may thereby use a combination of one or two independent air conveying means, i.e. a means for providing an overpressure in the region of the air supply or air inlet, (exemplarily in a cathode region of the fuel cell) and an underpressure means in the region of the exhaust gas extraction or the exhaust gas outlet, (exemplarily in an anode region of the fuel cell). The air supply device may thereby produce a flow of air in the direction of the air inlet. Therefore, the air supply device may be an air compression device. Alternatively, the air supply device may furthermore be an opening that allows air to be sucked into an air supply line. The extraction device produces suction at the exhaust gas outlet of the fuel cell. This combination may improve the air supply through the whole fuel cell system and all peripheric components attached thereto. Possibly including all air ducts, filters, air inlet openings, exhaust gas pipes etc. The air supply is thereby substantially independent from any ambient pressure such that, particularly in the use of aircraft, the actual flight state does not influence the operation of the fuel cell even if it is installed in an unpressurized part of an aircraft fuselage. Thereby, a rapid change of power demand is clearly improved as stated in DE 10 2011 004 318 A1.

According to the invention, for the purpose of improving the characteristics of the exhaust gas that is intended for use as an inerting gas, an improved water extraction device is included in the fuel cell system. As stated above the water extraction device may comprise at least two drying units. In order to allow for certain advantages it is preferable to design the drying units as regenerable drying units. The said drying units may thereby comprise a hygroscopic material that is adapted to absorb or bind water vapour contents in the exhaust gas and furthermore is adapted to later release the absorbed water vapour as a supply of heat again.

One of the at least two drying units is connectable between the air inlet of the fuel cell system and the air supply device. This means that firstly air, e.g. compressed air, flows through this particular one of the drying units and reaches the air inlet of the fuel cell system later. During the flow of compressed air through this drying unit, water bound in the hygroscopic material may be released into the air flow if it comprises a temperature clearly above the exhaust gas temperature of the fuel cell as explained in detail below. This particular one drying unit is thereby regenerated which means that the water content is successively reduced for preparing this drying unit to bind additional water vapour afterwards.

The air that leaves this particular drying unit reaches the fuel cell and thereby acts as the oxidant for the electrochemical fuel cell process. Through the release of water from the drying unit, the temperature of the air slightly decreases and the humidity increases. It is advantageous to use such humidified air as an oxidant for the fuel cell if the fuel cell were realized as a PEM fuel cell, as the membrane shall always maintain a predetermined humidity level.

The other one of the at least two drying units is later subjected to exhaust gas from the fuel cell. Thereby, water particles from the exhaust gas are absorbed in the hygroscopic material of the drying unit. Exhaust gas that leaves this other drying unit may then have a relatively low humidity that clearly improves the use of this exhaust gas for inerting purposes.

A core idea of the invention lies in that the water extraction device is adapted for selectively connecting different drying units either to the air supply side of the fuel cell or to the exhaust side. Thereby, each of the at least two drying units may either be regenerated during the air supply or may absorb water from the exhaust side. For assuring that at least one of the drying units is capable of drying exhaust gas the selective switching may be conducted in predetermined intervals. According to the invention, the selective switching is conducted in conjunction with a humidity sensor in the hygroscopic material, furthermore a physical simulation model that is capable of simulating the situation process of the hygroscopic material, e.g. based on measured situation characteristics of the hygroscopic material depending on the humidity of the air and its temperature may be used.

According to the present invention for heating air a heating unit is connected to the air supply device. The heating unit may thereby be positioned either upstream, i.e. at an inlet, or downstream, i.e. at an outlet, of the air supply device. It may be preferable to position the air supply device upstream of the heating unit.

In a further exemplary embodiment a condensation device is arranged between the exhaust gas outlet of the fuel cell and the water extraction device. Thereby, approximately 90% of the water vapour content in the exhaust gas may already be extracted before reaching any drying unit. Such a condensation device may be operated for example through the use of a large surface, such as inside a heat exchanger, wherein the surface may dissipate heat to its surroundings. This condensation device thereby provides a pre-drying process which pre-drying process reduces the necessary capacity for water absorption in the drying units such that reliability may be improved as well as a desired switchover interval being prolonged. Furthermore, the necessary dimensions of the water absorbing surface area, of the hygroscopic material, may be reduced such that a distinct advantage in the reduction of installation space and weight is achieved. If necessary, if a sufficient air flow is not present, e.g. during the ground operation of an aircraft that comprises a fuel cell system according to the invention, the condensation device may be equipped with an additional ventilating means for improving the heat dissipation and thereby the condensation.

In a preferred embodiment the water extraction device has a supply line for supplying compressed air, an extraction line for extracting exhaust gas, an oxidant line routing compressed air to the inlet of the fuel cell and an exhaust line receiving exhaust gas directly from the fuel cell, wherein each of the at least two drying units comprises a first port and a second port, wherein the first ports of each drying unit is connectable to the supply line through a corresponding supply valve, and connectable to the extraction line through a corresponding extraction valve, and wherein the second ports of each drying unit is connectable to the oxidant line through a corresponding oxidant valve and connectable to the exhaust line through a corresponding exhaust valve. Thereby, each drying unit may be connected to four different valves and thus the direction of flow and the relative humidity through all drying units can be changed from one extremum to the other. Thereby, a rather compact design of the water extraction device may be accomplished, as all drying units may be arranged parallel to each other and enclosed in one housing or being held in the same frame as the switching process allows the alteration of the actual flow path inside the water extraction device.

The individual valves may be connected to a control unit that takes care of an appropriate switching logic that prevents inadvertent connections of both ports to the same line, or other cases that might hinder normal operation. It may be useful that this control unit also comprises a logic that leads to a switchover in predetermined intervals. Furthermore, the control unit may be connected to humidity sensors that allow monitoring the saturation state of the hygroscopic material in the individual drying units for allowing an automated switchover in the absence of predetermined time intervals. Still further, the control unit may comprise a numerical simulation algorithm that allows the parallel simulation of the actual saturation state of the hygroscopic material in the drying units depending on temperature, humidity and flow rates of the individual gas flows through the drying units.

In a further exemplary embodiment the water extraction device comprises a total of three drying units. After drying one of the drying units by means of heated air it is advantageous to provide a third drying unit for allowing the drying unit that has just been dried to cool down before it is further subjected to humid air that is to be dried. Thereby, the water extraction capacity may be increased on demand, e.g. by connecting more than just one drying unit to the exhaust gas outlet of the fuel cell. At the same time, more than just one drying unit may be regenerated by subjecting the respective drying units to the compressed air flow.

In an advantageous embodiment the water extraction device is adapted for selectively providing a fluid connection from the air compressing device to the air inlet of the fuel cell through a first one of the three drying units, a fluid connection from the exhaust gas extracting device to the exhaust gas outlet through a second one of the three drying units in a cyclic manner, wherein a remaining third one of the three drying units is in an idle state. Hence, a first drying unit is provided between the air compressing device and the air inlet of the fuel cell. A second drying unit is connected between the exhaust gas extracting device and the exhaust gas outlet. A remaining, third drying unit is not connected to any of these components and therefore is in an idle state. After reaching a saturation state in the first drying unit that requires switching from a first connection to a second connection the first one of the drying units is connected between the exhaust gas extracting device and the exhaust gas outlet. The second one of the three drying units is disconnected from the exhaust gas extracting device and the exhaust gas outlet and is thereby set to an idle state. The third one of the three drying units is connected to the air compressing device and the air inlet and will thereby conduct the drying function. Afterwards, another switchover is conducted. Thereby, all three drying units will be set to two different connections or into an idle state. This is conducted in a cyclic manner such that each of the drying units are substantially used for the same amount of time in all three different connections.

A further advantageous improvement comprises an inerting port that is connectable to an enclosed space. The inert gas port may be situated downstream of the air extracting means and may provide for inert gas.

The invention furthermore relates to an aircraft having a fuel cell system as described above as well as at least one fuel tank having an inert gas input, wherein the inert gas input is connectable to an inert gas port positioned downstream of the air extracting means of the fuel cell system. Thereby, a highly flexible fuel cell system provides electrical energy for electrical consumers inside the aircraft, wherein the fuel cell system itself dynamically responds to rapidly changing load requirements without interrupting the fuel cell process.

The object relating to a method for operating a fuel cell system is met by the features presented in the independent method claim. The method according to the present invention basically comprises the steps of supplying air, leading heated supplied air to a first one of at least two drying units such that the respective drying unit is regenerated, leading humid air from the respective drying unit to the fuel cell air inlet, routing humid exhaust gas from the exhaust gas outlet to a second one of the at least two drying units for absorption of the water vapour contents of the exhaust gas and conveying the dried exhaust to an inert gas port. The air supply device may thereby be adapted for supplying compressed air, i.e. as an air compressing device. As explained above, the method may also comprise the step of switching over the connection of one drying unit to either the air supply device and the air inlet of the fuel cell, and the other to an exhaust gas outlet and an air extraction device.

A further embodiment of the method comprises the step of establishing a first connection of one drying unit between the air supply device and the air inlet of the fuel cell via the second drying unit and establishing a second connection between an exhaust gas outlet of the fuel cell and an exhaust gas extraction device via the first regenerated drying unit. Thereby at least two drying units may be used for drying exhaust gas and may be regenerated after reaching a certain saturation state.

The method may therefore further comprise the step of switching the first connection via the first drying unit and the second connection via the second drying unit in an alternating way such that one of the drying units is being regenerated in the first connection while the other one of the drying units is absorbing the water vapour contents of the exhaust gas in the second connection.

In a still further embodiment the fuel cell system comprises at least three drying units and the method further comprises the step of drying a third one of the at least three drying units, wherein the third drying unit is being dried and idle while the first drying unit is being regenerated in the first connection and the second drying unit is absorbing the water vapour contents of the exhaust gas in the second connection.

Another embodiment comprises the steps of switching the first connection via the dried third drying unit and the second connection via the saturated second drying unit and drying the first drying unit in a cyclic way such that one of the drying units is being regenerated in the first connection while another one of the drying units is absorbing the water vapour contents of the exhaust gas in the second connection and yet another one of the drying units is being dried. The regeneration process of the drying units may thereby be improved.

In a still further embodiment the step of drying one of the drying units comprises heating and/or blowing air, e.g. through the introduction of heated ambient air or bleed air.

In a further step, the connection may be changed such that in predetermined intervals, one of the drying units is regenerated while the other drying unit is accomplishing the drying process.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, irrespective of their composition in the individual claims or their interrelationships. Furthermore, identical or similar components in the figures have the same reference characters.
Fig. 1 shows a fuel cell system according to the invention in a block-oriented schematic view.
Fig. 2 shows an aircraft with a fuel tank and a fuel cell system.

### DETAILED DESCRIPTION OF EXEMPLARY EMBODIMENTS

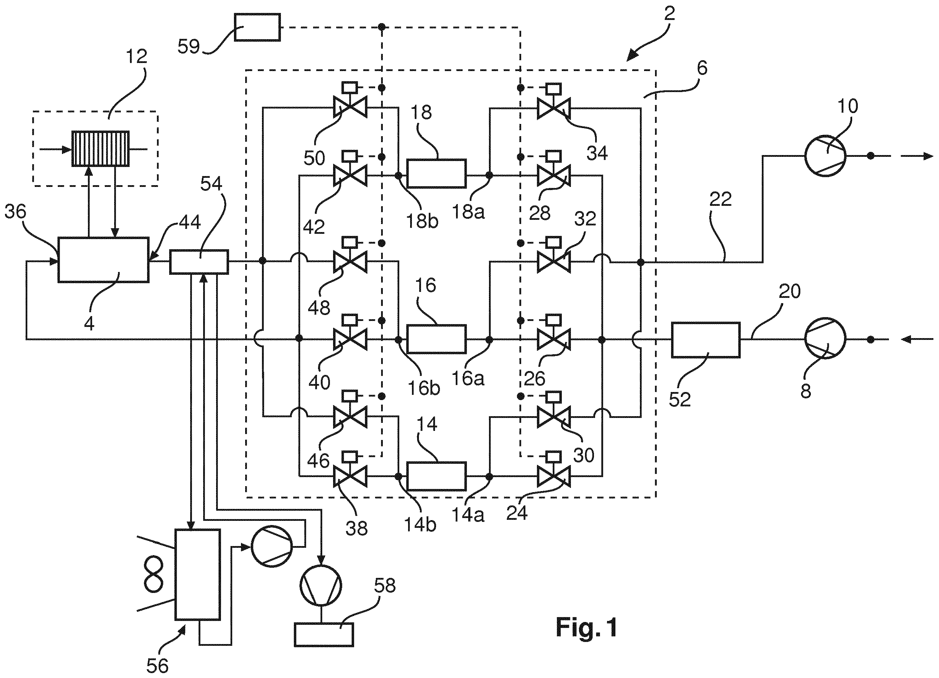

Fig. 1 shows a fuel cell system 2 having a fuel cell 4, a water extraction device 6, an air supply device 8 and an air extracting means 10. The air supply device 8 is exemplarily realized as an air compressing device. The fuel cell 4 may be designed as a PEM fuel cell that comprises a membrane and operates at medium temperatures in the range of e.g. 60 °C to 80 °C. For the purpose of increasing the available electrical power and for adapting the electrical voltage to a required level the fuel cell 4 does not necessarily comprise just a single fuel cell but may preferably be realized as a fuel cell stack with a plurality of single fuel cells arranged in a staggered manner and connected by means of parallel and/or serial connections.

For the purpose of supplying a fuel gas, a fuel gas supply unit may be present, which fuel gas supply unit is not depicted. Primarily, the fuel cell 4 may need a supply of hydrogen. This may be conducted by means of a pure hydrogen supply but may also be based on hydrogen containing fuel gas as an output from a reforming apparatus that converts a fuel based on carbohydrates to a hydrogen-containing gas. The core of the invention does not depend on the characteristics of the fuel gas.

The fuel cell 4 is furthermore connected to a fuel cell cooling unit 12, exemplarily depicted in a block-like schematic view. The cooling unit 12 may comprise a heat exchanger which is flown through by a coolant heated by the fuel cell 4 flows, which coolant transfers heat to air, e.g. air from the surroundings of the fuel cell system, fuel of a fuel tank inside a vehicle, e.g. an aircraft, a fluid that delivers heat to heat consuming devices, such as an anti-icing system in an aircraft, or any other means that is capable of sufficiently receiving heat.

The water extraction device 6 comprises a first drying unit 14, a second drying unit 16 and a third drying unit 18. These drying units 14, 16 and 18 are based on a hygroscopic, water-absorbing material contained in an appropriate housing that allows a flow-through of air. By supplying heated air, water bound in the hygroscopic material may be released. By supplying humid air, the water vapour is absorbed by the hygroscopic material. The hygroscopic material will at some point be saturated such that it will not absorb any additional water. For enabling the absorption of additional water it is regenerated by means of supplying heated air.

All drying units 14, 16 and 18 comprise a first port 14a, 16a, 18a and a second port 14b, 16b and 18b. Each of the first ports are connectable to a supply line 20 downstream of the air supply device 8, and connectable to an extraction line 22 upstream of the extraction device 10 by way of supply valves 24, 26 and 28 and extraction valves 30, 32 and 34. On the other side, each second port 14b, 16b and 18b is connectable to an air inlet 36 of the fuel cell 4 by means of oxidant valves 38, 40, 42 and connectable to an exhaust gas outlet 44 of the fuel cell 4 through exhaust valves 46, 48 and 50. With this arrangement it is possible to route compressed air from the air supply device 8 through any of the first, second and third drying units 14, 16 and 18 for supplying air to the air inlet 36 of the fuel cell 4. At the same time, the exhaust gas arising at the exhaust gas outlet 44 of the fuel cell 4 may be routed through any of the first, second or third drying units 14, 16 and 18 for the purpose of supplying dried exhaust gas to the air extraction device 10.

The basic idea of this arrangement lies in that each of the first, second and third drying units 14, 16 and 18 may be selectively regenerated in a cyclic manner by the supply of air in order to always have at least one drying unit capable of absorbing water vapour from exhaust gas of the fuel cell 4. Furthermore, by-products such as separate regenerating air flows, can be prevented.

The addition of a heater 52 directly downstream of the air supply device 8 leads to an elevated temperature of the source of compressed air that has a rather low relative humidity for improving the regeneration process. For example, the heater 52 may heat the compressed air to a temperature of around 120 °C. Through the absorption of water contained in the hygroscopic material of the respective drying unit to be regenerated, and through leading this humidified air to the air inlet port 36 of the fuel cell 4 the temperature of the compressed air decreases to a level capable of operating the fuel cell 4.

The individual drying units 14, 16 and 18 are used in a cyclic way to absorb water vapour of the exhaust gas of the fuel cell 4.

For example, the first drying unit 14 is connected between the air supply device 8 and the air inlet 36 of the fuel cell 4 and thereby operates in a regeneration state, where absorbed water is removed from the hygroscopic material. At the same time the second drying unit 16 is connected between the exhaust gas extracting device 10 and the exhaust gas outlet 44 of the fuel cell 4 and thereby operates in a drying state, where water vapour from the humid exhaust gas is absorbed by the hygroscopic material until a certain saturation state is reached. In the meantime, the third drying unit 18 is in an idle state and thereby is neither drying humid exhaust gas nor is regenerated.

After reaching a predetermined saturation state in the second drying unit 16 the connections of the drying units 14, 16 and 18 are switched such that the first drying unit 14 is disconnected from the air supply device 8 and the air inlet 36 of the fuel cell 4 to reach an idle state; the second drying unit 16 is connected to air supply device 8 and the air inlet 36 of the fuel cell 4 to be operated in an regeneration state; the third drying unit 18 is now connected between the exhaust gas extracting device 10 and the exhaust gas outlet 44 for being operated in a drying state.

After the third drying unit reaches a predetermined saturation state, the connections of the three drying units 14, 16 and 18 is switched once more such that they are operated in the respective remaining operation state. The switching over of the connections may be conducted in a cyclic manner such that in predetermined intervals the connections are changed over.

A pre-drying means 54, e.g. realized as a condensation device, may be located directly downstream of the exhaust gas port 44 of the fuel cell 4. There, a distinct surface area, which surface area is thermally connected to a heat dissipation means 56, leads to continuous condensation water vapour being present in the exhaust gas, which condensate is then conveyed to a condensation water tank 58. By this measure, approximately 90% of the water vapour content in the exhaust gas may be removed prior to reaching the individual drying units. Thereby, total humidity can be drastically decreased.

The valves 24-50 are exemplarily connected to a control unit 59 that controls the appropriate switching process through an individual controlling of the valves 24-50. The control unit 59 may be connected to humidity sensors integrated into the drying units 14, 16 and 18 and may also comprise a switching logic for switching over at predetermined intervals of time or may also follow an internal numerical simulation.

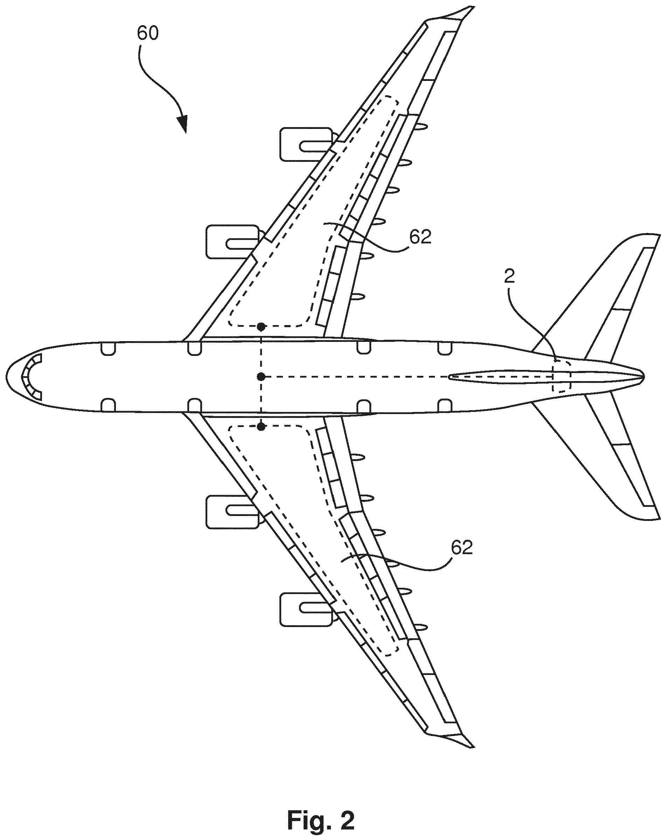

Fig. 2 shows an aircraft 60 having a fuel tank 62 and a fuel cell system 2. According to Fig. 1, dried inert gas that is provided by the exhaust gas extraction device 10 is supplied to the tank 62 in order to provide an inert atmosphere. By the advantageous drying process conducted as explained above hardly any water vapour reaches the tank 62 and thus prevents the accumulation or absorption of water in the fuel and also prevents the generation of bacteria inside the tank.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. Fuel cell system (2), comprising
- at least one fuel cell (4) having an air inlet (36) and an exhaust gas outlet (44),
- an air supply device (8) connectable to the air inlet (36) and
- an exhaust gas extracting device (10) connectable to the exhaust gas outlet (44),
a heating unit (52) being connected to the air supply device (8) for heating air and a water extraction device (6), the water extraction device (6) having at least two drying units (14, 16, 18), wherein the water extraction device (6) is adapted for selectively providing a fluid connection from the air supply device (8) to the air inlet (36) of the fuel cell (4) through a first one of the at least two drying units (14, 16, 18) and a fluid connection from the exhaust gas extracting device (10) to the exhaust gas outlet (44) through a second one of the at least two drying units (14, 16, 18)
**characterized in that** the at least two drying units (14, 16, 18) comprise a humidity sensor in the hygroscopic material.

2. Fuel cell system (2) of claim 1, wherein the air supply device (8) is an air compressing device.

3. Fuel cell system (2) of claim 1 or 2, further comprising a condensation device (54) arranged between the exhaust gas outlet (44) of the fuel cell (4) and the water extraction device (6).

4. Fuel cell system (2) of any of the preceding claims, wherein the water extraction device (6) has a supply line (20) for supplying compressed air, an extraction line (22) for extracting exhaust gas, an oxidant line routing compressed air to the inlet (36) of the fuel cell (4) and an exhaust line receiving exhaust gas directly AJG
from the exhaust gas outlet (44) of the fuel cell (4), wherein each of the at least two drying units (14, 16, 18) comprises a first port (14a, 16a, 18a) and a second port (14b, 16b, 18b), wherein the first ports (14a, 16a, 18a) of each drying unit (14, 16, 18) are connectable to the supply line (20) through a corresponding supply valve (24, 26, 28) and connectable to the extraction line (22) through a corresponding extraction valve (30, 32, 34), and wherein the second ports (14b, 16b, 18b) of each drying unit (14, 16, 18) are connectable to the oxidant line through a corresponding oxidant valve (38, 40, 42), and connectable to the exhaust line through a corresponding exhaust valve (46, 48, 50).

5. Fuel cell system (2) of any of the preceding claims, wherein the water extraction device (6) comprises three drying units (14, 16, 18).

6. Fuel cell system (2) of claim 5, wherein the water extraction device (6) is adapted for selectively providing a fluid connection from the air supply device (8) to the air inlet (36) of the fuel cell (4) through a first one of the three drying units (14, 16, 18), a fluid connection from the exhaust gas extracting device (10) to the exhaust gas outlet (44) through a second one of the three drying units (14, 16, 18) in a cyclic manner, wherein a remaining third one of the three drying units (14, 16, 18) is in an idle state.

7. Fuel cell system (2) of any of the preceding claims, further comprising an inerting port that is connectable to an enclosed space.

8. Aircraft (60), comprising a fuel cell system (2) of any of the claims 1 to 7 and at least one fuel tank (62) having an inert gas input, wherein the inert gas input is connectable to an inert gas port positioned downstream of the exhaust gas extracting device (10) of the fuel cell system (2).

9. Method for operating a fuel cell system, comprising the steps of:
- supplying air,
- leading heated supplied air to a first one of at least two drying units (14, 16, 18) such that the first drying unit (14, 16, 18) is regenerated,
- leading humid air from the first drying unit (14, 16, 18) to the air inlet (36) of the fuel cell (4),
- routing humid exhaust gas from the exhaust gas outlet (44) to a second one of the at least two drying units (14, 16, 18) for absorption of the water vapour contents of the exhaust gas, and
- conveying the dried exhaust to an inert gas port
- determining the humidity in the at least two drying units (14, 16, 18) with a humidity sensor in the hygroscopic material.

10. Method of claim 9, further comprising the step of establishing a first connection of one drying unit (14, 16, 18) between the air supply device (8) and the air inlet (36) of the fuel cell (4) via the second drying unit (14, 16, 18) and establishing a second connection between an exhaust gas outlet (44) of the fuel cell (4) and an exhaust gas extraction device (10) via the first regenerated drying unit (14, 16, 18).

11. Method of claim 9 or 10, further comprising the step of switching the first connection via the first drying unit (14, 16, 18) and the second connection via the second drying unit (14, 16, 18) in an alternating way such that one of the drying units (14, 16, 18) is being regenerated in the first connection while the other one of the drying units (14, 16, 18) is absorbing the water vapour contents of the exhaust gas in the second connection.

12. Method of claim 10 or 11, wherein said fuel cell system comprises at least three drying units (14, 16, 18), further comprising the step of drying a third one of the at least three drying units (14, 16, 18), wherein the third drying unit (14, 16, 18) is being dried and idle while the first drying unit (14, 16, 18) is being regenerated in the first connection and the second drying unit (14, 16, 18) is absorbing the water vapour contents of the exhaust gas in the second connection.

13. Method of claim 12, further comprising the steps of switching the first connection via the dried third drying unit (14, 16, 18) and the second connection via the wet second drying unit (14, 16, 18) and drying the first drying unit (14, 16, 18) in a cyclic way such that one of the drying units (14, 16, 18) is being regenerated in the first connection while another one of the drying units (14, 16, 18) is absorbing the water vapour contents of the exhaust gas in the second connection and yet another one of the drying units (14, 16, 18) is being dried.

14. Method of claim 12 or 13, wherein the step of drying one of the drying units (14, 16, 18) comprises heating and/or blowing air.

## Patentansprüche

1. Brennstoffzellensystem (2), das Folgendes umfasst:
- zumindest eine Brennstoffzelle (4) mit einem Lufteinlass (36) und einem Abgasauslass (44),
- eine Luftzufuhrvorrichtung (8), verbindbar mit dem Lufteinlass (36), und
- eine Abgasextraktionsvorrichtung (10), verbindbar mit dem Abgasauslass (44),
eine Heizeinheit (52), die mit der Luftzufuhrvorrichtung (8) verbunden ist, zum Erhitzen von Luft und eine Wasserextraktionsvorrichtung (6), wobei die Wasserextraktionsvorrichtung (6) mindestens zwei Trocknungseinheiten (14, 16, 18) aufweist, wobei die Wasserextraktionsvorrichtung (6) angepasst ist zum gezielten Bereitstellen einer Fluidverbindung von der Luftzufuhrvorrichtung (8) zum Lufteinlass (36) der Brennstoffzelle (4) über eine erste der mindestens zwei Trocknungseinheiten (14, 16, 18) und einer Fluidverbindung von der Abgasextraktionsvorrichtung (10) zum Abgasauslass (44) über eine zweite der mindestens zwei Trocknungseinheiten (14, 16, 18),
**dadurch gekennzeichnet, dass** die mindestens zwei Trocknungseinheiten (14, 16, 18) einen Feuchtigkeitssensor im hygroskopischen Material umfassen.

2. Brennstoffzellensystem (2) nach Anspruch 1, wobei die Luftzufuhrvorrichtung (8) eine Luftverdichtungsvorrichtung ist.

3. Brennstoffzellensystem (2) nach Anspruch 1 oder 2, ferner umfassend eine Kondensationsvorrichtung (54), angeordnet zwischen dem Abgasauslass (44) der Brennstoffzelle (4) und der Wasserextraktionsvorrichtung (6).

4. Brennstoffzellensystem (2) nach einem der vorhergehenden Ansprüche, wobei die Wasserextraktionsvorrichtung (6) eine Zufuhrleitung (20) zum Zuführen von Druckluft, eine Extraktionsleitung (22) zum Extrahieren von Abgas, eine Oxidationsmittelleitung, die Druckluft zum Einlass (36) der Brennstoffzelle (4) leitet, und eine Abgasleitung, die Abgas direkt aus dem Abgasauslass (44) der Brennstoffzelle (4) aufnimmt, aufweist, wobei jede der mindestens zwei Trocknungseinheiten (14, 16, 18) eine erste Öffnung (14a, 16a, 18a) und eine zweite Öffnung (14b, 16b, 18b) umfasst, wobei die ersten Öffnungen (14a, 16a, 18a) der einzelnen Trocknungseinheiten (14, 16, 18) mit der Zufuhrleitung (20) über ein entsprechendes Zufuhrventil (24, 26, 28) verbindbar sind und mit der Extraktionsleitung (22) über ein entsprechendes Extraktionsventil (30, 32, 34) verbindbar sind, und wobei die zweiten Öffnungen (14b, 16b, 18b) der einzelnen Trocknungseinheiten (14, 16, 18) mit der Oxidationsmittelleitung über ein entsprechendes Oxidationsmittelventil (38, 40, 42) verbindbar sind und mit der Abgasleitung über ein entsprechendes Auslassventil (46, 48, 50) verbindbar sind.

5. Brennstoffzellensystem (2) nach einem der vorhergehenden Ansprüche, wobei die Wasserextraktionsvorrichtung (6) drei Trocknungseinheiten (14, 16, 18) umfasst.

6. Brennstoffzellensystem (2) nach Anspruch 5, wobei die Wasserextraktionsvorrichtung (6) angepasst ist zum gezielten Bereitstellen einer Fluidverbindung von der Luftzufuhrvorrichtung (8) zum Lufteinlass (36) der Brennstoffzelle (4) über eine erste der drei Trocknungseinheiten (14, 16, 18), einer Fluidverbindung von der Abgasextraktionsvorrichtung (10) zum Abgasauslass (44) über eine zweite der drei Trocknungseinheiten (14, 16, 18) in einer zyklischen Weise, wobei eine verbleibende dritte der drei Trocknungseinheiten (14, 16, 18) in einem Leerlaufzustand ist.

7. Brennstoffzellensystem (2) nach einem der vorhergehenden Ansprüche, ferner umfassend eine Inertisierungsöffnung, die mit einem geschlossenen Raum verbindbar ist.

8. Luftfahrzeug (60), umfassend ein Brennstoffzellensystem (2) nach einem der Ansprüche 1 bis 7 und zumindest einen Brennstofftank (62) mit einem Inertgaseingang, wobei der Inertgaseingang mit einer Inertgasöffnung verbindbar ist, der stromabwärts der Abgasextraktionsvorrichtung (10) des Brennstoffzellensystems (2) positioniert ist.

9. Verfahren zum Betreiben eines Brennstoffzellensystems, das die folgenden Schritte umfasst:
- Zuführen von Luft,
- Leiten von erhitzter zugeführter Luft zu einer ersten von zwei Trocknungseinheiten (14, 16, 18), sodass die erste Trocknungseinheit (14, 16, 18) regeneriert wird,
- Leiten von feuchter Luft von der ersten Trocknungseinheit (14, 16, 18) zum Lufteinlass (36) der Brennstoffzelle (4),
- Führen von feuchtem Abgas vom Abgasauslass (44) zu einer zweiten der mindestens zwei Trocknungseinheiten (14, 16, 18) zur Absorption des Wasserdampfinhalts des Abgases, und
- Fördern des getrockneten Abgases zu einer Inertgasöffnung
- Bestimmen der Feuchtigkeit in den mindestens zwei Trocknungseinheiten (14, 16, 18) mit einem Feuchtigkeitssensor im hygroskopischen Material.

10. Verfahren nach Anspruch 9, ferner umfassend den Schritt des Errichtens einer ersten Verbindung einer Trocknungseinheit (14, 16, 18) zwischen der Luftzufuhrvorrichtung (8) und dem Lufteinlass (36) der Brennstoffzelle (4) über die zweite Trocknungseinheit (14, 16, 18) und Errichten einer zweiten Verbindung zwischen einem Abgasauslass (44) der Brennstoffzelle (4) und einer Abgasextraktionsvorrichtung (10) über die erste regenerierte Trocknungseinheit (14, 16, 18).

11. Verfahren nach Anspruch 9 oder 10, ferner umfassend den Schritt des Schaltens der ersten Verbindung über die erste Trocknungseinheit (14, 16, 18) und der zweiten Verbindung über die zweite Trocknungseinheit (14, 16, 18) in einer alternierenden Weise, sodass eine der Trocknungseinheiten (14, 16, 18) in der ersten Verbindung regeneriert wird, während die andere der Trocknungseinheiten (14, 16, 18) den Wasserdampfinhalt des Abgases in der zweiten Verbindung absorbiert.

12. Verfahren nach Anspruch 10 oder 11, wobei das Brennstoffzellensystem mindestens drei Trocknungseinheiten (14, 16, 18) umfasst, ferner umfassend den Schritt des Trocknens einer dritten der mindestens drei Trocknungseinheiten (14, 16, 18), wobei die dritte Trocknungseinheit (14, 16, 18) getrocknet wird und im Leerlauf ist, während die erste Trocknungseinheit (14, 16, 18) in der ersten Verbindung regeneriert wird und die zweite Trocknungseinheit (14, 16, 18) in der zweiten Verbindung Wasserdampfinhalt des Abgases absorbiert.

13. Verfahren nach Anspruch 12, ferner umfassend den Schritt des Schaltens der ersten Verbindung über die getrocknete dritte Trocknungseinheit (14, 16, 18) und der zweiten Verbindung über die nasse zweite Trocknungseinheit (14, 16, 18) und Trocknen der ersten Trocknungseinheit (14, 16, 18) in einer zyklischen Weise, sodass eine der Trocknungseinheiten (14, 16, 18) in der ersten Verbindung regeneriert wird, während eine andere der Trocknungseinheiten (14, 16, 18) den Wasserdampfinhalt des Abgases in der zweiten Verbindung absorbiert und noch eine andere der Trocknungseinheiten (14, 16, 18) getrocknet wird.

14. Verfahren nach Anspruch 12 oder 13, wobei der Schritt des Trocknens einer der Trocknungseinheiten (14, 16, 18) Erhitzen und/oder Blasen von Luft umfasst.

## Revendications

1. Système de pile à combustible (2), comprenant
- au moins une pile à combustible (4) présentant une entrée d'air (36) et une sortie de gaz d'échappement (44),
- un dispositif d'alimentation en air (8) pouvant être connecté à l'entrée d'air (36) et
- un dispositif d'extraction de gaz d'échappement (10) pouvant être connecté à la sortie de gaz d'échappement (44),
une unité de chauffage (52) étant connectée au dispositif d'alimentation en air (8) pour chauffer l'air et à un dispositif d'extraction d'eau (6), le dispositif d'extraction d'eau (6) présentant au moins deux unités de séchage (14, 16, 18), le dispositif d'extraction d'eau (6) étant adapté pour fournir sélectivement une connexion de fluide du dispositif d'alimentation en air (8) à l'entrée d'air (36) de la pile à combustible (4) à travers une première des au moins deux unités de séchage (14, 16, 18) et une connexion de fluide du dispositif d'extraction de gaz d'échappement (10) à la sortie de gaz d'échappement (44) à travers une deuxième des au moins deux unités de séchage (14, 16, 18),
**caractérisé en ce que** les au moins deux unités de séchage (14, 16, 18) comprennent un capteur d'humidité dans le matériau hygroscopique.

2. Système de pile à combustible (2) selon la revendication 1, dans lequel le dispositif d'alimentation en air (8) est un dispositif de compression d'air.

3. Système de pile à combustible (2) selon la revendication 1 ou 2, comprenant en outre un dispositif de condensation (54) agencé entre la sortie de gaz d'échappement (44) de la pile à combustible (4) et le dispositif d'extraction d'eau (6).

4. Système de pile à combustible (2) selon l'une quelconque des revendications précédentes, dans lequel le dispositif d'extraction d'eau (6) présente une conduite d'alimentation (20) pour alimenter de l'air comprimé, une conduite d'extraction (22) pour extraire des gaz d'échappement, une conduite d'oxydant acheminant de l'air comprimé jusqu'à l'entrée (36) de la pile à combustible (4) et une conduite d'échappement recevant des gaz d'échappement directement de la sortie de gaz d'échappement (44) de la pile à combustible (4), dans lequel chacune des au moins deux unités de séchage (14, 16, 18) comprend un premier orifice (14a, 16a, 18a) et un deuxième orifice (14b, 16b, 18b), dans lequel les premiers orifices (14a, 16a, 18a) de chaque unité de séchage (14, 16, 18) peuvent être connectés à la conduite d'alimentation (20) à travers une vanne d'alimentation correspondante (24, 26, 28) et peuvent être connectés à la conduite d'extraction (22) à travers une vanne d'extraction correspondante (30, 32, 34), et dans lequel les deuxièmes orifices (14b, 16b, 18b) de chaque unité de séchage (14, 16, 18) peuvent être connectés à la conduite d'oxydant à travers une vanne d'oxydant correspondante (38, 40, 42) et peuvent être connectés à la conduite d'échappement à travers une vanne d'échappement correspondante (46, 48, 50).

5. Système de pile à combustible (2) selon l'une quelconque des revendications précédentes, dans lequel le dispositif d'extraction d'eau (6) comprend trois unités de séchage (14, 16, 18).

6. Système de pile à combustible (2) selon la revendication 5, dans lequel le dispositif d'extraction d'eau (6) est adapté pour fournir sélectivement une connexion de fluide du dispositif d'alimentation en air (8) à l'entrée d'air (36) de la pile à combustible (4) à travers une première des trois unités de séchage (14, 16, 18), une connexion de fluide du dispositif d'extraction de gaz d'échappement (10) à la sortie de gaz d'échappement (44) à travers une deuxième des trois unités de séchage (14, 16, 18) de manière cyclique, une troisième unité restante des trois unités de séchage (14, 16, 18) se trouvant dans un état inactif.

7. Système de pile à combustible (2) selon l'une quelconque des revendications précédentes, comprenant en outre un orifice d'inertage qui peut être connecté à un espace fermé.

8. Aéronef (60), comprenant un système de pile à combustible (2) selon l'une quelconque des revendications 1 à 7 et au moins un réservoir de combustible (62) présentant une entrée de gaz inerte, l'entrée de gaz inerte pouvant être connectée à un orifice de gaz inerte positionné en aval du dispositif d'extraction de gaz d'échappement (10) du système de pile à combustible (2).

9. Procédé d'exploitation d'un système de pile à combustible, comprenant les étapes consistant à :
- alimenter de l'air,
- amener de l'air alimenté chauffé jusqu'à une première des au moins deux unités de séchage (14, 16, 18) de sorte que la première unité de séchage (14, 16, 18) est régénérée,
- amener de l'air humide de la première unité de séchage (14, 16, 18) à l'entrée d'air (36) de la pile à combustible (4),
- acheminer des gaz d'échappement humides de la sortie de gaz d'échappement (44) à une deuxième des au moins deux unités de séchage (14, 16, 18) pour une absorption de la teneur en vapeur d'eau des gaz d'échappement, et
- transporter les gaz d'échappement séchés jusqu'à un orifice de gaz inerte,
- déterminer l'humidité dans les au moins deux unités de séchage (14, 16, 18) avec un capteur d'humidité dans le matériau hygroscopique.

10. Procédé selon la revendication 9, comprenant en outre l'étape consistant à établir une première connexion d'une unité de séchage (14, 16, 18) entre le dispositif d'alimentation en air (8) et l'entrée d'air (36) de la pile à combustible (4) par l'intermédiaire de la deuxième unité de séchage (14, 16, 18) et établir une deuxième connexion entre une sortie de gaz d'échappement (44) de la pile à combustible (4) et un dispositif d'extraction de gaz d'échappement (10) par l'intermédiaire de la première unité de séchage régénérée (14, 16, 18).

11. Procédé selon la revendication 9 ou 10, comprenant en outre l'étape consistant à commuter la première connexion par l'intermédiaire de la première unité de séchage (14, 16, 18) et la deuxième connexion par l'intermédiaire de la deuxième unité de séchage (14, 16, 18) en alternance de sorte que l'une des unités de séchage (14, 16, 18) est régénérée dans la première connexion pendant que l'autre des unités de séchage (14, 16, 18) absorbe la teneur en vapeur d'eau des gaz d'échappement dans la deuxième connexion.

12. Procédé selon la revendication 10 ou 11, dans lequel ledit système de pile à combustible comprend au moins trois unités de séchage (14, 16, 18), comprenant en outre l'étape consistant à sécher une troisième des au moins trois unités de séchage (14, 16, 18), la troisième unité de séchage (14, 16, 18) étant séchée et inactive pendant que la première unité de séchage (14, 16, 18) est régénérée dans la première connexion et la deuxième unité de séchage (14, 16, 18) absorbe la teneur en vapeur d'eau des gaz d'échappement dans la deuxième connexion.

13. Procédé selon la revendication 12, comprenant en outre les étapes consistant à commuter la première connexion par l'intermédiaire de la troisième unité de séchage séchée (14, 16, 18) et la deuxième connexion par l'intermédiaire de la deuxième unité de séchage humide (14, 16, 18) et à sécher la première unité de séchage (14, 16, 18) de manière cyclique de sorte que l'une des unités de séchage (14, 16, 18) est régénérée dans la première connexion pendant qu'une autre des unités de séchage (14, 16, 18) absorbe la teneur en vapeur d'eau des gaz d'échappement dans la deuxième connexion et encore une autre des unités de séchage (14, 16, 18) est séchée.

14. Procédé selon la revendication 12 ou 13, dans lequel l'étape consistant à sécher l'une des unités de séchage (14, 16, 18) comprend un chauffage et/ou soufflage d'air.
